# EUROPÄISCHE PATENTSCHRIFT

(11) **EP 2 262 962 B1**
(45) Veröffentlichungstag und Bekanntmachung des Hinweises auf die Patenterteilung: **14.03.2018**
(21) Anmeldenummer: 09721639.4
(22) Anmeldetag: 16.03.2009
(51) Int. Cl.: E04H 9/02, F16F 15/023

(54) **DÄMPFUNGSVORRICHTUNG**
DAMPING DEVICE
DISPOSITIF D'AMORTISSEMENT

(30) Priorität: 19.03.2008 DE 102008015106
(43) Veröffentlichungstag der Anmeldung: 22.12.2010
(73) Patentinhaber: Copf, Franz Senior, 71638 Ludwigsburg (DE)
(72) Erfinder: COPF, Desirée, 68549 Ilvesheim (DE); COPF, Peter, 71638 Ludwigsburg (DE)
(74) Vertreter: Cohausz Hannig Borkowski Wißgott
(86) Internationale Anmeldenummer: PCT/EP2009/001907
(87) Internationale Veröffentlichungsnummer: WO 2009/115270

(56) Entgegenhaltungen:
- EP-A- 0 555 790
- EP-A- 1 820 922
- JP-A- 2000 249 186

## Beschreibung

Die Erfindung betrifft eine Dämpfungsvorrichtung, insbesondere Erdbebendämpfer.

Dämpfungsvorrichtungen sind im Stand der Technik hinlänglich bekannt und werden mit verschiedensten Konstruktionsweisen eingesetzt, um beispielsweise Stöße zu dämpfen, insbesondere auch solche, wie sie bei Erdbeben auftreten. So eine Dämpfungsvorrichtung is zum Beispiel aus der EP 0 555 790 A1 bekannt. Auch bei jeglichen anderen Anwendungen, in denen Stöße auftreten können, wie beispielsweise auch im Kraftfahrzeugbereich, sind solche Dämpfungsvorrichtungen bekannt.

Sie haben allesamt den Nachteil, dass die Dämpfung mit den bekannten Dämpfungsvorrichtungen im Wesentlichen nur in einer bestimmten, aufgrund der Konstruktion der Dämpfungsvorrichtung gegebenen Richtung ideal ist. Üblicherweise handelt es sich dabei um Konstruktionen, die eine Dämpfung in idealer Weise nur in einer linearen Richtung erlauben.

Oftmals tritt das Problem auf, dass Gegenstände gegen Stoßeinwirkung sicher mit Dämpfungsvorrichtungen gelagert werden sollen, ohne vorher exakt zu wissen, aus welcher Richtung Stöße auf den zu lagernden Gegenstand einwirken können. Diese Situation ist beispielsweise bei Erdbeben gegeben. Sowohl die Stärke der auftretenden Stöße als auch die Richtung, in der diese auf einen Gegenstand, wie beispielsweise ein Gebäude wirken, kann nicht vorhergesagt werden. Selbst wenn dies so wäre, können einmal eingebaute Dämpfungsvorrichtungen bekannter Art nicht in die entsprechende Richtung, aus der die Stöße kommen, ausgerichtet werden. Daher ist eine effektive Abwehr von Stößen oder Vibrationen, insbesondere solchen, wie sie bei Erdbeben auftreten, schwer zu erzielen, wenn nicht sogar vollständig ausgeschlossen.

Aufgabe der Erfindung ist es daher, eine Dämpfungsvorrichtung bereitzustellen, die bezüglich vieler Richtung, bevorzugt sämtlicher Richtungen zumindest im Wesentlichen gleiche Dämpfungseigenschaften aufweist. Eine derartige Dämpfungsvorrichtung kann universell verwendet werden, ohne eine bestimmte Einbaurichtung berücksichtigen zu müssen.

Gelöst wird die Aufgabe durch eine Dämpfungsvorrichtung, die einen hohlen Kugelkörper umfasst, der mit einer Dämpfungsflüssigkeit gefüllt ist und mehrere, in radialer Richtung angeordnete Dämpfungskörper umfasst, deren radial innen liegende Enden an einer gemeinsamen, insbesondere mittig in dem Kugelkörper angeordneten Halterung befestigt sind und deren radial außen liegenden Enden direkt oder indirekt an der Innenwandung des Kugelkörpers befestigt sind.

Eine derartige erfindungsgemäße Dämpfungsvorrichtung kann somit in bevorzugter Ausführung vollständig symmetrisch bezüglich des Mittelpunktes des Kugelkörpers aufgebaut sein, zumindest was die Innenkonstruktion des Kugelkörpers betrifft. Es wird so sichergestellt, dass jegliche Stöße, die aus beliebigen Richtungen auf den Kugelkörper treffen, aufgrund dieser zumindest im Wesentlichen bestehenden Symmetrie immer gleich gedämpft werden.

Dabei ergeben sich bei der erfindungsgemäßen Dämpfungsvorrichtung im Wesentlichen zwei Dämpfungseffekte, nämlich zum einen unmittelbar aufgrund der Energievernichtung von einwirkenden Stößen innerhalb der Flüssigkeit sowie als zweiten Effekt eine Energievernichtung der Stöße in den Dämpfungskörpern. Da diese radial im Kugelkörper angeordnet sind und darüber hinaus bevorzugt zueinander eine Symmetrie aufweisen, insbesondere eine Punktsymmetrie zum Mittelpunkt des Kugelkörpers, ist auch der zweite überlagerte Dämpfungseffekt durch die zusätzlichen Dämpfungskörper zumindest im Wesentlichen für alle Richtungen gleich.

Der innere Aufbau der Dämpfungsvorrichtung, also die Anordnung der Dämpfungskörper um die gemeinsame Halterung herum kann durch eine Befestigung unmittelbarer oder mittelbarer Art über Zwischenelemente an der Innenwandung des Kugelkörpers in diesem zentral angeordnet werden. Insbesondere so dass die gemeinsame Halterung in der Mitte des Kugelkörpers liegt. Aufgrund der radialen Anordnung der Dämpfungskörper und der bevorzugten Symmetrie kann dieser Aufbau aus zentraler Halterung und Dämpfungskörpern eine 3-dimensional sternförmige Anordnung bilden.

Ein derartiger Kugelkörper der erfindungsgemäßen Dämpfungsvorrichtung kann z.B. in zwei einander gegenüberliegenden Lagerböcken gehalten sein. So kann einer der beiden Lagerböcke beispielsweise einem Fundament zugeordnet sein und der gegenüberliegende Lagerbock einem zu lagernden Gegenstand, wie beispielsweise einem Gebäude.

Ebenso ist es aufgrund der Kugelkonstruktion der Dämpfungsvorrichtung möglich, diesen nicht nur in zwei einander gegenüberliegenden Lagerböcken zu halten, sondern gegebenenfalls auch in mehreren Lagerböcken, die wiederum bevorzugt symmetrisch um den Kugelkörper herum angeordnet sind.

Nach einer erfindungsgemäß bevorzugten Ausführung ist es vorgesehen, dass bereits die Dämpfungsflüssigkeit derart gewählt ist, dass diese Stöße, insbesondere Stoßwellen, die sich innerhalb der Dämpfungsflüssigkeit ausbreiten, dämpfen, insbesondere auf einen Bruchteil dämpft. Beispielsweise kann hierfür eine Dämpfungsflüssigkeit eingesetzt werden, die Moleküle umfasst, die bei Ausübung von Stößen bzw. bei Stoßwellen, die die Dämpfungsflüssigkeit durchwandern, ihre Geometrie ändern und hierbei Energie verbrauchen. Hierbei ist bevorzugt die Dämpfungsflüssigkeit derart gewählt, dass die Geometrieänderung vollständig und zerstörungsfrei reversibel ist.

In besonders bevorzugter Ausführung kann es sich dabei um eine Dämpfungsflüssigkeit handeln, die große Moleküle mit langen Radikalen aufweist, wie beispielsweise eine Flüssigkeit, die Proteoglykane umfasst. Solche Proteoglykane haben eine fedrige Struktur, beispielsweise mit einer Hyaluronsäure als Kiel und können in hohem Maße durch Stoßwellen eingetragene Energie dämpfen. Proteoglykane können Molekülaggregate mit Massen von etwa 2 x 10⁶ und Längen von mehreren Mikrometern bilden. Viskoelastische Eigenschaften können somit maßgeblich durch Proteoglykane definiert werden. Proteoglykane bestehen dabei aus Untereinheiten von Polysacchariden zu ca. 95% und Proteinen zu ca. 5%. Die Polysaccharidketten der Proteoglykane werden durch Glykosaminoglykane gebildet, die sich wiederholende Disaccharid-Einheiten umfassen, die ein Derivat eines Aminozuckers, entweder Glocosamin oder Galatosamin enthalten. Die wichtigsten Glykosaminoglykane sind z.B. Hyaloronat, Chondroitinsulfat, Keratansulfat, Heparansulfat und Heparin.

Bekannt sind solche Proteoglykane beispielsweise aus dem Zell-, insbesondere Binde- und/oder Knochengewebe von Lebewesen. Es kann daher in einer möglichen Ausführung auch vorgesehen sein, dass es sich bei der eingesetzten Dämpfungsflüssigkeit um interossale Flüssigkeit handelt, insbesondere solche, die aus spongiösem Knochenmaterial von Tieren stammt. Beispielsweise kann eine solche Flüssigkeit aus den Knochen oder Gewebe von Tierkadavern gewonnen werden oder aber eine solche Dämpfungsflüssigkeit mit denselben oder zumindest im Wesentlichen ähnlichen Eigenschaften kann synthetisch hergestellt werden. Z.B. kann es sich um eine der interossalen Flüssigkeit naturidentische aber synthetische Flüssigkeit handeln.

Eine Dämpfungsflüssigkeit die erfindungsgemäß zum Einsatz kommen kann, insbesondere ein Proteoglykane umfassende Flüssigkeit kann z.B. folgende Eigenschaften aufweisen: Dichte bei 21 °C von 0,995 g/cm³, Wichte bei 21°C von 9786 N/m³, dynamische Viskosität bei 36°C von 0,23 bis 0,25 Pa s.

Bei synthetischer Dämpfungsflüssigkeit kann z.B. Wasser, physiologische Kochsalzlösung oder Meerwasser zum Einsatz kommen als Basisflüssigkeit, welcher Proteoglykane beigemischt werden. Im übrigen kann Blutplasma aus Lebewesen, insbesondere Tieren, als Basisflüssigkeit verwendet werden.

In einer Weiterbildung der Dämpfungsflüssigkeit kann es vorgesehen sein, dass die Dämpfungsflüssigkeit Alkalien umfasst, wie z.B. NaOH, insbesondere um eine Kompressibilität zu erzielen. Es kann vorgesehen sein, eine Zumischung von Alkalien vorzunehmen, so dass eine Kompressibilität bezogen auf das Volumen der Flüssigkeit von mehreren Prozent, z.B. 5 bis 15%, bevorzugt 10 % erzielt wird. Erfindungsgemäss besteht der eingangs genannte Kugelkörper aus zwei kugelschalenförmigen Elementen, die aneinander gedichtet und überlappend befestigt sind. Hierbei kann bei einer möglichen Ausführung im Wesentlichen jedes der kugelschalenförmigen Elemente größer sein als eine Halbkugelschale, so dass diese beiden Elemente sich in einem Umfangsbereich des Kugelkörpers überlappen können. Hierbei ist es wesentlich, dass in dem Überlappungsbereich der Kugelschalenelemente diese gedichtet aneinander / ineinander anliegen. Vorteilhaft ist eine derartige Ausgestaltung, da so die beiden kugelschalenförmigen Elemente zumindest teilbereichsweise um den gemeinsamen Mittelpunkt herum sich relativ zueinander rotativ bewegen können und darüber hinaus die beiden kugelschalenförmigen Elemente auch in einer linearen Richtung relativ zueinander bewegt werden können, wobei die Überlappung in einem Umfangsbereich zu- bzw. abnimmt. Dies hat beispielsweise den Vorteil, dass auf einer erfindungsgemäßen Dämpfungsvorrichtung gelagerte Gegenstände, wie beispielsweise Gebäude, ihre Schwingungen, insbesondere solche, die durch Erdbebenstöße verursacht wurden, besser in die Dämpfungsvorrichtung und insbesondere die innere Konstruktion des Kugelkörpers einleiten können. Darüber hinaus wird bei starken Bewegungen in einer linearen Richtung senkrecht zur Ebene der Überlappung vermieden, dass sich irreversible Verformungen am Kugelkörper ergeben. Um dies zu erreichen können die Kugelschalenelemente ein obere und ein unteres Element bilden, wobei jedes einem Lagerbock zugeordnet ist.

In einer ersten einfachen Ausführungsform der erfindungsgemäßen Dämpfungsvorrichtung kann es vorgesehen sein, dass die eingangs genannten Dämpfungskörper ausgebildet sind als Zylinder-Kolben-Aggregate, die mit einem Arbeitsfluid versehen sind, d.h. dass die Dämpfungskörper im Wesentlichen üblichen Stoßdämpfern entsprechen, die auf Zug und/oder Schub dämpfend wirken. Hier können insbesondere die radial außen liegenden Enden an der Innenwandung des Kugelkörpers befestigt sein.

Auch hier ist es in einer bevorzugten Ausführung vorgesehen, dass die Vielzahl von Dämpfungskörpern, die bei dieser Ausführung eingesetzt werden, symmetrisch um den Mittelpunkt des Kugelkörpers jeweils mit einer radialen Erstreckung angeordnet sind und sich an einer gemeinsamen Halterung abstützen. Diese Halterung kann z.B. ebenso eine Kugelform aufweisen. Es ist bevorzugt vorgesehen, mindestens sechs von derartigen Dämpfungskörpern einzusetzen, wobei jeweils vier in Ebenen liegen, die zueinander senkrecht sind.

Bei jeder beliebigen Anzahl von Dämpfungskörpern dieser oder auch der nachfolgend noch erläuterten Art können immer zwei Dämpfungskörper beidseits der gemeinsamen Halterung in einer Linie angeordnet sein.

Bei dieser Art der Ausgestaltung der Dämpfungskörper wirken im Wesentlichen die Dämpfungsfunktionen von Flüssigkeit und Dämpfungskörper unabhängig voneinander. In einer anderen erfindungsgemäßen und bevorzugten Ausgestaltung hingegen ist es vorgesehen, dass die Dämpfungskörper ausgebildet sind als mit der Dämpfungsflüssigkeit gefüllte Röhren, deren Enden mit Membranen verschlossen sind, wobei jede Membran mindestens eine Durchgangsöffnung aufweist. Ansonsten weisen diese Dämpfungskörper dieselbe radiale Anordnung auf, wie eingangs beschrieben.

Hier ergibt sich ein Zusammenspiel aus zwei Dämpfungswirkungen, die einerseits durch die unmittelbar Dämpfung von Stoßwellen bei der Propagation innerhalb der Dämpfungsflüssigkeit bewirkt wird und die andererseits durch ein Strömen der Dämpfungsflüssigkeit innerhalb der Dämpfungskörper bewirkt wird.

Dabei wird durch die genannte Membran, die wenigstens eine Durchgangsöffnung aufweist, eine Querschnittsreduzierung innerhalb der Röhren erzeugt mit einem dementsprechend erhöhten Strömungswiderstand.

In einer weiterhin bevorzugten Ausführung kann es hier auch vorgesehen sein, dass eine Röhre, insbesondere jede Röhre, zwischen den genannten endseitigen Membranen wenigstens eine weitere Membran, bevorzugt eine Vielzahl von Membranen im Inneren der Röhre aufweist, die ebenso jeweils wenigstens eine Durchgangsöffnung aufweisen. Dabei ist es bevorzugt vorgesehen, dass die Durchgangsöffnungen von zwei in der Längserstreckung der Röhren aufeinanderfolgenden Membranen nicht fluchtend angeordnet sind.

Auch hierbei wird gegenüber einer fluchtenden Anordnung ein höherer Strömungswiderstand innerhalb der Röhren erzielt. Eine besonders bevorzugte Ausführung wird darin gesehen, wenn die Durchgangsöffnungen aller Membranen einer Röhre auf einer Helix angeordnet sind. Dabei wird unter dieser Helixanordnung bereits verstanden, wenn eine Durchgangsöffnung im Bereich ihres gesamten Öffnungsquerschnittes um eine sich durch die Röhre gedachte erstreckende Helix angeordnet ist, bevorzugt wenn die Mitte einer jeweiligen Durchgangsöffnung exakt auf der Helix liegt.

In einer bevorzugten Weiterbildung ist es vorgesehen, dass die Röhren im Bereich ihrer außen liegenden Enden in einer Hohlkugel angeordnet sind, die sich innerhalb des Kugelkörpers befindet und bevorzugt denselben Mittelpunkt aufweist wie der Kugelkörper. Diese Hohlkugel kann beispielsweise an der Innenwandung des Kugelkörpers befestigt sein, z.B. federnd befestigt sein durch Zug- oder Druckfedern, die sich in radialer Richtung zwischen dem Äußeren der Hohlkugel und dem Inneren des Kugelkörpers befinden.

Es wird so eine stabile Lage dieser Hohlkugel relativ zum Kugelkörper erzielt, bei der die Mittelpunkte von Hohlkugel und Kugelkörper bevorzugt übereinstimmend sind, so dass auch die Röhren, die sich in radialer Richtung erstrecken, zumindest im Wesentlichen ortsfest innerhalb des Kugelkörpers angeordnet sind. Durch die Anordnung der Röhren zumindest in ihrem radial außen liegenden Endbereich in einer solchen Hohlkugel wird erfindungsgemäß erreicht, dass eine auf den Kugelkörper einlaufende Stoßwelle einen Druckunterschied zwischen einem äußeren und einem inneren Bereich des Kugelkörpers hervorruft, die durch die Hohlkugel getrennt sind, so dass sich hierdurch eine gezielte Strömung der Dämpfungsflüssigkeit durch die Röhren ergibt um einen Druckausgleich zu erzielen.

Statt die Röhren lediglich im Bereich ihrer radial außen liegenden Enden in dieser genannten Hohlkugel anzuordnen, kann es auch vorgesehen sein, dass die Röhren mit ihren Enden exakt in der Oberfläche dieser inneren Hohlkugel angeordnet sind, also quasi die Membranen der radial außen liegenden Enden der Röhren einen Teil der Kugeloberfläche bilden.

In einer darüber hinaus weiteren bevorzugten Ausbildung ist es vorgesehen, nicht nur eine Hohlkugel innerhalb des Kugelkörpers anzuordnen, sondern eine Vielzahl von ineinander angeordneten Hohlkugeln vorzusehen, insbesondere welche jeweils denselben Mittelpunkt übereinstimmend mit dem des Kugelkörpers aufweisen, wobei hier die Röhren in radialer Richtung alle Hohlkugeln durchdringen, insbesondere gedichtet durchdringen. Es wird hier also in einer bevorzugten Ausführung sicher gestellt, dass Dämpfungsflüssigkeit nicht durch Bereiche zwischen den Röhren und den Hohlkugeloberflächen hindurchdringen kann. Beispielsweise können hierfür die Röhren und Hohlkugeln, die z.B. metallisch ausgebildet sein können, miteinander verklebt, verlötet oder verschweißt oder auf andere Art gedichtet aneinander gefügt sein. Ebenso kann der äußerste Kugelkörper der aus einem Teil oder auch aus zwei Kugelschalenelementen besteht, aus Metall gefertigt sein. Die Röhren kann z.B. zumindest hinsichtlich ihres Wandungsmaterials und/oder Membranmaterial auch elastisch ausgebildet sein, z.B. aus einem Elastomer wie Gummi etc.

Zwecks optimaler Platzausnutzung kann es hier auch weiterhin vorgesehen sein, dass bei sämtlichen der zuvor genannten Ausführungen die sich in radialer Richtung erstreckenden Röhren von außen nach innen im Querschnitt verringern. Die Röhren können dabei bevorzugt eine Kegelabschnittsform aufweisen.

In einer weiteren Ausführung kann es vorgesehen sein, dass die Röhren und/oder die Hohlkugeln perforiert sind. Auch hierbei können sich Strömungen der Dämpfungsflüssigkeit durch diese Perforationen einstellen, die zu einer weiteren Dämpfung beitragen, zum einen durch die unmittelbaren Strömungswiderstände und zum anderen auch durch die aufgrund der Strömung auf die Dämpfungsflüssigkeit wirkenden Kräfte und die damit einhergehenden Geometrieänderung der Moleküle, wie es eingangs als wesentlich für die Dämpfungsflüssigkeit erwähnt wurde.

In wiederum weiterer Ausführung kann an den Lagerböcken ebenfalls eine Dämpfungsvorrichtung angeordnet sein zur Dämpfung von Stößen z.B. in einer bestimmten linearen Richtung. Auch hierbei kann es sich um Dämpfungsvorrichtungen handeln, die mit der genannten Dämpfungsflüssigkeit und Dämpfungskörper der genannten Art gefüllt sind, wobei diese Dämpfungsvorrichtung ausgebildet sein können aus zwei gedichtet linear zueinander verschiebbaren Dämpfungsvorrichtungselementen zwischen denen statt wie bei der zuvor benannten erfindungsgemäßen Ausführung radial nun die Dämpfungskörper linear in Längserstreckung der Vorrichtung angeordnet sind. Hier kann das innere Volumen durch wenigstens eine Trennfläche unterteilt sein, durch die sich die eingangs genannten röhrenförmigen Dämpfer parallel zueinander in der linearen Richtung erstrecken.

Ausführungsbeispiele der Erfindung sind in den nachfolgenden Figuren dargestellt. Es zeigen:
- Figur 1: eine erste Ausführung mit hydraulischen Dämpfungskörpern
- Figur 2: eine zweite erfindungsgemäße Ausführung mit röhrenförmigen, mit Dämpfungsflüssigkeit gefüllten Röhren
- Figur 3: Eine Detailansicht röhrenförmiger Dämpfungskörper
- Figur 4: eine schematische Darstellung eines Proteoglykans
- Figur 5: Strukturformeln der Disaccharid-Einheiten von einigen wichtigen Glykosaminoglykanen.

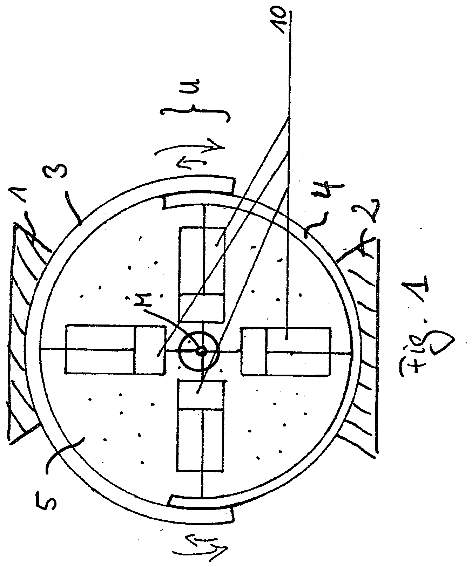

Die Figur 1 zeigt hier in einer beispielhaften Darstellung einer möglichen Ausführungsform der Erfindung einen Kugelkörper, der aus zwei Kugelschalenelementen 3 und 4 aufgebaut ist, wobei diese beiden Kugelschalenelemente, die bezogen auf diese Ausführung untere und obere Elemente bilden, in einem im Wesentlichen horizontal liegenden Umfangsbereich U einander überlappen.

Es besteht so die Möglichkeit, dass sich diese beiden Kugelschalenelemente zumindest bereichsweise um den hier dargestellten Mittelpunkt M des Kugelkörpers herum rotativ bewegen können, so wie auch in im Wesentlichen vertikaler Richtung relativ zueinander, wodurch sich die Überlappungszone U vergrößert oder auch verringert.

Dargestellt ist hier, dass das obere Kugelschalenelement 3 in einem oberen Lagerbock 1 angeordnet ist bzw. an diesem befestigt ist und das untere Kugelschalenelement 4 an einem unteren Lagerbock 2, welcher beispielsweise ein Fundament bilden kann, wohingegen der zuvor genannte Lagerbock 1 mit einem Gegenstand, wie beispielsweise einem Gebäude verbunden sein kann. Hier können die beiden Kugelschalenelemente 3 und 4 beispielsweise aus Metall gefertigt sein und bevorzugt gleiche Materialstärke aufweisen, wobei das untere Kugelschalenelement 4 einen leicht geringeren Durchmesser aufweist als das obere, damit diese im Überlappungsbereich ineinander gefügt werden können.

Das innere Volumen des so ausgeführten erfindungsgemäßen Kugelkörpers ist gefüllt mit einer Dämpfungsflüssigkeit 5 mit den im allgemeinen Beschreibungsteil erwähnten Eigenschaften. Eine solche Flüssigkeit wird auch als eine "ideale Flüssigkeit" nach Max Planck bezeichnet. Die Eigenschaften einer solchen "idealen Flüssigkeit" werden in der Natur tatsächlich beispielsweise von den eingangs genannten Arten von Flüssigkeiten zumindest näherungsweise erreicht.

Erkennbar ist hier weiterhin eine zum Mittelpunkt M des Kugelkörpers symmetrische Anordnung von hydraulischen Stoßdämpfern 10 , die ihr eigenes Arbeitsfluid, wie z.B. ein Hydrauliköl aufweisen. Sowohl unter Zug- als auch unter Schubbeanspruchung dämpfen diese Stoßdämpfer durch eine innere Strömung der Flüssigkeit z.B. durch den Kolben. Die hier dargestellten Stoßdämpfer 10 sind symmetrisch zum Mittelpunkt des Kugelkörpers angeordnet, wobei in dieser hier dargestellten Ausführung insgesamt sechs Stoßdämpfer 10 vorgesehen sind, von denen jeweils vier immer in einer Ebene liegen, so dass sich hier zwei Ebenen ergeben, die senkrecht zueinander angeordnet sind und jeweils die vier Stoßdämpfer aufweisen.

Auf diesen erfindungsgemäßen Dämpfer einlaufende Stoßwellen, wie beispielsweise Erdbebenstoßwellen, werden demnach sowohl durch die internen Stoßdämpfer 10 sowie auch innerhalb der Dämpfungsflüssigkeit 5 gedämpft.

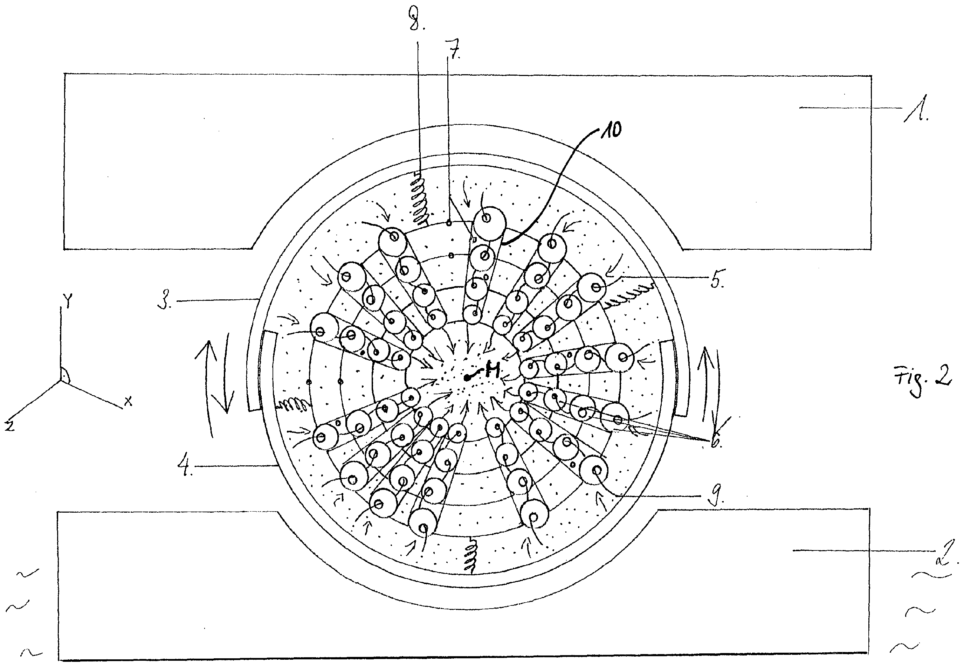

Die Figur 2 zeigt demgegenüber eine weitere bevorzugte Ausführungsform mit an sich gleicher äußerer Konstruktion wie bei der Figur 1, wobei hier jedoch die interne Konstruktion innerhalb des Kugelkörpers aus den beiden Kugelkörperelemente 3 und 4 einen anderen Aufbau aufweist.

Erkennbar ist hier, dass in dem Kugelkörper eine Vielzahl von Hohlkugeln 7 angeordnet ist, die hier bevorzugt alle den gleichen Mittelpunkt M aufweisen, der mit dem Mittelpunkt des Kugelkörpers übereinstimmt. Hierbei sind die Hohlkugeln 7 zumindest im Wesentlichen äquidistant zueinander angeordnet, dies ist jedoch nicht zwingend nötig. In radialer Richtung sind die Hohlkugeln 7 von einer Vielzahl von Dämpfungskörpern 10 durchsetzt, die röhrenförmig ausgebildet sind und deren radial außen liegende Enden entweder in der größten der inneren Hohlkugeln 7 enden oder über deren Oberfläche hinausragen. Erkennbar ist hier, dass sowohl die äußeren als auch inneren Enden der Röhren Membranen 6 mit Durchgangsöffnungen 6a aufweisen, wobei auch zwischen diesen extremal angeordneten Membranen 6 weitere Membranen 6 mit Durchgangsöffnungen 6a angeordnet sind und sämtliche Durchgangsöffnungen 6a dieser Membranen 6 auf einer Helix 9 angeordnet sind. Darüber hinaus weisen die Röhrenwandungen Perforationen 10a auf, ebenso wie auch die Hohlkugeln 7 selbst. Es kann so bewirkt werden, dass bei einlaufenden Stoßwellen sich aufgrund der Druckunterschiede innerhalb des erfindungsgemäßen Kugelkörpers nicht nur eine Dämpfung aufgrund der propagierenden Stoßwellen ergibt, sondern auch eine Dämpfung aufgrund der strömenden Dämpfungsflüssigkeit 5 innerhalb der Röhren 10.

Auch hier ist die Konstruktion derart, dass die radial innen liegenden Enden alle an einer gemeinsamen, um die Mitte des Kugelkörpers angeordneten Halterung abgestützt sind. Auch hierbei kann es sich ebenso um eine Hohlkugel 7 handeln.

Um eine stabile Lage der inneren Konstruktion in dem Kugelkörper zu erzielen, ist es hier vorgesehen, die äußere Hohlkugel 7 über Federelemente 8 am Innenbereich des Kugelkörpers federnd zu befestigen. Zumindest in einer Ruhelage werden demnach die jeweiligen Mittelpunkte M der einzelnen Hohlkugeln / mit demjenigen des Kugelkörpers übereinstimmen.

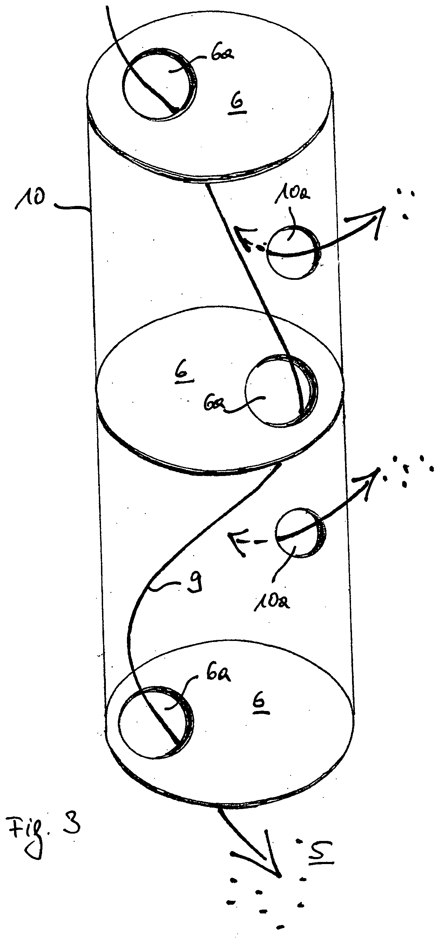

Die Figur 3 zeigt ergänzend eine detailliertere Darstellung eines röhrenförmigen Dämpfungskörpers 10, wie er bei der Ausführung gemäß der Figur 2 zum Einsatz kommen kann. Hier ist eine Ausführungsform dargestellt, bei der in radialer Richtung keine Querschnittsverringerung erfolgt, sondern die Röhre zylindrisch ausgebildet ist. Erkennbar ist hier, dass die oberen und unteren Endflächen von einer Membran 6 abgeschlossen sind, die eine exzentrische Durchgangsöffnung 6a aufweist. Zwischen diesen beiden endseitigen Membranen 6 ist hier exemplarisch lediglich eine weitere Membran 6 angeordnet, wobei durch die dargestellte Helix 9 verdeutlicht wird, dass alle Öffnungen 6a der Membranen 6 dieser Röhre auf der Helix 9 angeordnet sind. Auch die Wandbereiche der Röhre 10 weisen hier Durchgangsöffnungen 10a auf.

Es ist darauf hinzuweisen, dass die hier dargestellten Figuren lediglich exemplarisch zu verstehen sind und den Gegenstand der Erfindung nicht maßstäblich, sondern im Wesentlichen lediglich schematisch verdeutlichen. So kann es hier vorgesehen sein, dass die Röhren relativ zum Kugelkörper weitaus geringere Abmessungen aufweisen, wie es hier schematisch in Relation dargestellt ist. Die Figuren sind keineswegs als maßstäblich zu verstehen.

Es kann beispielsweise sein, dass die Röhren Durchmesser lediglich im Mikrometerbereich aufweisen, ebenso wie die Durchgangsöffnungen in den Membranen und die Perforationen in den Röhrenwandungen oder Hohlkugeln. Bevorzugt können die Abmessungen der Röhrendurchmesser im Bereich von 20 bis 200 Mikrometer, weiter bevorzugt von 40 bis 60 Mikrometer und die Öffnungen in den Röhrenwandungen, Membranen oder Hohlkugeln im Bereich von 3 bis 40 Mikrometer, weiter bevorzugt 5 bis 10 Mikrometer ausgebildet sind. Gerade die Ausführung mit diesem geringen Abmessungen im Mikrometerbereich hat den Vorteil, dass bei einer Dämpfungsflüssigkeit mit Proteoglykanen oder anderen langkettigen Molekülen, diese langkettigen Moleküle viel Energie beim Strömen durch de geringen Querschnitte verlieren.

Die hier beschriebene Dämpfungsvorrichtung kann nicht nur zum Einsatz für die Dämpfung von Erdbebenstößen Verwendung finden, sondern grundsätzlich in jeglicher Anwendung, in welcher die Einwirkung von Stößen auf einen Gegenstand minimiert werden sollen.

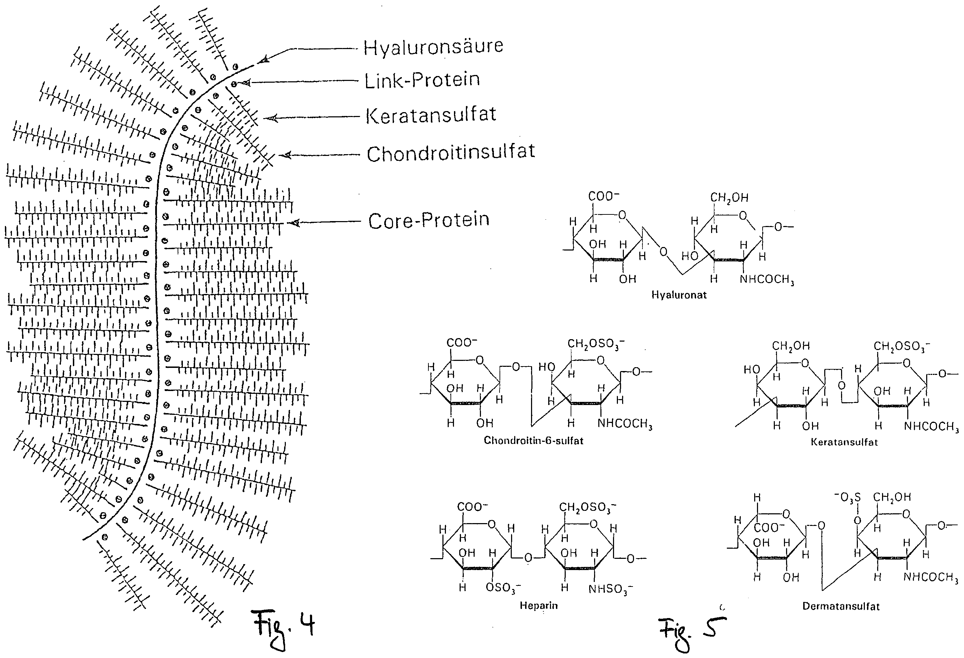

Die Figur 4 zeigt exemplarisch in einer schematischen Darstellung ein Proteoglykan-Molekül. Erkennbar ist ein Hyaloronsäurekiel, an den Glykosaminoglykane angegliedert sind. Ein solche Molekül kann eine Länge von einem bis mehreren Mikrometern aufweisen. Die Figur 5 zeigt exemplarisch einige Disaccharid-Einheiten von wichtigen Glykosaminoglykanen. Flüssigkeiten, die derartige Moleküle umfassen, können somit hervorragende Dämpfungseigenschaften aufweisen.

Bezüglich sämtlicher Ausführungen ist festzustellen, dass die in Verbindung mit einer Ausführung genannten technischen Merkmale nicht nur bei der spezifischen Ausführung eingesetzt werden können oder eingesetzt sind, sondern auch bei den jeweils anderen Ausführungen. Sämtliche offenbarten technischen Merkmale dieser Erfindungsbeschreibung sind als erfindungswesentlich einzustufen und beliebig miteinander kombinierbar oder in Alleinstellung einsetzbar. Dabei wird in der gesamten Offenbarung unter der Erwähnung, dass ein Merkmal vorgesehen sein kann oder ein Verfahrenschritt durchgeführt werden kann auch eine Ausführung der Erfindung verstanden, in der das betreffende Merkmal vorgesehen ist bzw. ein betreffender Verfahrensschritt durchgeführt wird.

## Patentansprüche

1. Dämpfungsvorrichtung, die einen hohlen Kugelkörper umfasst, der zweiteilig ausgebildet ist, wobei der Kugelkörper mit einer Dämpfungsflüssigkeit (5) gefüllt ist und mehrere in radialer Richtung angeordnete Dämpfungskörper (10) umfasst, deren radial innen liegende Enden an einer gemeinsamen mittig in dem Kugelkörper angeordneten Halterung befestigt sind und deren radial außen liegende Enden direkt oder indirekt an der Innenwandung des Kugelkörpers befestigt sind, **dadurch gekennzeichnet, dass** der Kugelkörper aus zwei kugelschalenförmigen Elementen (3,4) ausgebildet ist, die aneinander gedichtet und überlappend befestigt sind und die zumindest teilbereichsweise um den gemeinsamen Mittelpunkt herum relativ zueinander rotativ bewegbar sind und in linearer Richtung zueinander bewegbar sind, wobei die Überlappung im Umfangsbereich zu- oder abnimmt.

2. Dämpfungsvorrichtung nach Anspruch 1, **dadurch gekennzeichnet, dass** die Dämpfungsflüssigkeit (5) Moleküle umfasst, deren Geometrieänderung bei Stößen Energie verbraucht.

3. Dämpfungsvorrichtung nach Anspruch 2, **dadurch gekennzeichnet, dass** die Dämpfungsflüssigkeit (5) Proteoglykane umfasst, insbesondere mit einer Beimischung von Alkalien, z.B. NaOH.

4. Dämpfungsvorrichtung nach Anspruch 2 oder 3, **dadurch gekennzeichnet, dass** es sich bei der Dämpfungsflüssigkeit (5) um interossale Flüssigkeit handelt, insbesondere die aus spongiösem Knochenmaterial von Tieren gewonnen ist.

5. Dämpfungsvorrichtung nach einem der vorherigen Ansprüche, **dadurch gekennzeichnet, dass** die Dämpfungskörper (10) als mit einem Arbeitsfluid versehene Zylinder-Kolben-Aggregate ausgebildet sind, deren radial aussen liegende Enden an der Innenwandung des Kugelkörpers befestigt sind.

6. Dämpfungsvorrichtung nach einem der vorherigen Ansprüche, **dadurch gekennzeichnet, dass** die Dämpfungskörper (10) ausgebildet sind als mit der Dämpfungsflüssigkeit (5) gefüllte Röhren deren Enden durch Membranen (6) verschlossen sind, wobei jede Membran (6) wenigstens eine Durchgangsöffnung (6a) aufweist.

7. Dämpfungsvorrichtung nach Anspruch 6, **dadurch gekennzeichnet, dass** eine Röhre (10), insbesondere jede Röhre (10) zwischen den Membranen (6) an den Enden wenigstens eine weitere Membran (6) im Inneren aufweist, die wenigstens eine Durchgangsöffnung (6a) aufweist.

8. Dämpfungsvorrichtung nach Anspruch 6 oder 7, **dadurch gekennzeichnet, dass** die Durchgangsöffnungen (6a) von zwei in der Längserstreckung der Röhren (10) aufeinderfolgenden Membranen (6) nicht fluchtend angeordnet sind.

9. Dämpfungsvorrichtung nach einem der vorherigen Ansprüche 6 bis 8, **dadurch gekennzeichnet, dass** die Durchgangsöffnungen (6a) aller Membranen (6) einer Röhre (10) auf einer Helix (9) angeordnet sind.

10. Dämpfungsvorrichtung nach einem der vorherigen Ansprüche 6 bis 9, **dadurch gekennzeichnet, dass** die Röhren (10) im Bereich ihrer radial aussen liegenden Enden in einer Hohlkugel (7) angeordnet sind, insbesondere die mit demselben Mittelpunkt (M) im Kugelkörper angeordnet ist und an der Innenwandung des Kugelkörpers befestigt ist, insbesondere federn befestigt ist.

11. Dämpfungsvorrichtung nach einem der vorherigen Ansprüche 6 bis 10, **dadurch gekennzeichnet, dass** der Kugelkörper eine Vielzahl von ineinander angeordneten Hohlkugeln (7) aufweist, insbesondere mit demselben Mittelpunkt (M), wobei die Röhren (10) in radialer Richtung die Hohlkugeln (7) durchdringen, insbesondere gedichtet durchdringen.

12. Dämpfungsvorrichtung nach einem der vorherigen Ansprüche 6 bis 11, **dadurch gekennzeichnet, dass** die Röhren (10) und/oder die Hohlkugeln (7) perforiert sind.

13. Dämpfungsvorrichtung nach einem der vorherigen Ansprüche, **dadurch gekennzeichnet, dass** der Kugelkörper in wenigstens zwei Lagerböcken (1,2) gehalten ist, die symmetrisch um den Kugelkörper angeordnet sind, insbesondere bei zwei Lagerböcken an gegenüberliegenden Seiten.

## Claims

1. Damping device which comprises a hollow spherical body which is formed in two parts, wherein the spherical body is filled with a damping liquid (5) and comprises a plurality of damping bodies (10) arranged in a radial direction, the radially internal ends of which are fastened to a holder arranged in the centre of the spherical body and the radially external ends of which are fastened directly or indirectly to the inner wall of the spherical body, **characterized in that** the spherical body is formed from two elements (3, 4) in the form of spherical shells, which are fastened together in a leaktight and overlapping manner and which are rotatable relative to one another at least partially about the common centre and are movable in a linear direction with respect to one another, wherein the overlap in the circumferential region increases or decreases.

2. Damping device according to Claim 1, **characterized in that** the damping liquid (5) comprises molecules, the change in geometry of which in the event of impacts consumes energy.

3. Damping device according to Claim 2, **characterized in that** the damping liquid (5) comprises proteoglycans, in particular with admixture of alkalis, for example NaOH.

4. Damping device according to Claim 2 or 3, **characterized in that** the damping liquid (5) is interosseous liquid, in particular which is obtained from spongy bone material of animals.

5. Damping device according to one of the preceding claims, **characterized in that** the damping bodies (10) are formed as cylinder/piston units provided with a working fluid, the radially external ends of which are fastened to the inner wall of the spherical body.

6. Damping device according to one of the preceding claims, **characterized in that** the damping bodies (10) are formed as tubes filled with the damping liquid (5), the ends of which are closed by diaphragms (6), wherein each diaphragm (6) has at least one through-opening (6a).

7. Damping device according to Claim 6, **characterized in that** one tube (10), in particular each tube (10), has, between the diaphragms (6) at the ends, at least one further diaphragm (6) on the inside, which has at least one through-opening (6a).

8. Damping device according to Claim 6 or 7, **characterized in that** the through-openings (6a) in two successive diaphragms (6) in the longitudinal extent of the tubes (10) are arranged in a non-aligned manner.

9. Damping device according to one of the preceding Claims 6 to 8, **characterized in that** the through-openings (6a) in all the diaphragms (6) of a tube (10) are arranged on a helix (9).

10. Damping device according to one of the preceding Claims 6 to 9, **characterized in that** the tubes (10) are arranged in a hollow sphere (7) in the region of their radially external ends, said hollow sphere (7) being arranged in particular with the same centre (M) in the spherical body and being fastened to the inner wall of the spherical body, in particular in a resilient manner.

11. Damping device according to one of the preceding Claims 6 to 10, **characterized in that** the spherical body has a multiplicity of hollow spheres (7) arranged one inside another, in particular with the same centre (M), wherein the tubes (10) pass through the hollow spheres (7) in a radial direction, in particular in a leaktight manner.

12. Damping device according to one of the preceding Claims 6 to 11, **characterized in that** the tubes (10) and/or the hollow spheres (7) are perforated.

13. Damping device according to one of the preceding claims, **characterized in that** the spherical body is held in at least two bearing blocks (1, 2) which are arranged symmetrically around the spherical body, in particular with two bearing blocks on opposite sides.

## Revendications

1. Dispositif amortisseur, comprenant un corps sphérique creux, lequel est construit en deux parties, dans lequel le corps sphérique est rempli d'un fluide amortisseur (5) et comporte plusieurs corps d'amortissement (10) disposés dans la direction radiale, dont les extrémités pointant vers l'intérieur sont fixées à un support commun disposé au centre du corps sphérique et dont les extrémités pointant vers l'extérieur sont fixées directement ou indirectement à la paroi interne du corps sphérique, **caractérisé en ce que** le corps sphérique est formé de deux éléments (3, 4) de forme hémisphérique, joints de manière étanche l'un à l'autre et fixés en se chevauchant et sont au moins partiellement mobiles en rotation l'un par rapport à l'autre autour du centre commun et sont mobiles l'un par rapport à l'autre dans la direction linéaire, dans lequel le chevauchement dans la zone de circonférence augmente ou diminue.

2. Dispositif amortisseur selon la revendication 1, **caractérisé en ce que** le fluide amortisseur (5) comprend des molécules, dont le changement de géométrie absorbe de l'énergie lors de chocs.

3. Dispositif amortisseur selon la revendication 2, **caractérisé en ce que** le fluide amortisseur (5) comprend des protéoglycanes, en particulier avec un mélange de bases, p. ex. NaOH.

4. Dispositif amortisseur selon la revendication 2 ou 3, **caractérisé en ce qu'**il s'agit pour le fluide amortisseur (5) de fluide interosseux, en particulier obtenu à partir de matière osseuse spongieuse animale.

5. Dispositif amortisseur selon l'une des revendications ci-dessus, **caractérisé en ce que** les corps d'amortissement (10) sont conçus comme dotés d'un ensemble piston-cylindre muni d'un fluide de travail, dont les extrémités pointant vers l'extérieur sont fixées à la paroi interne du corps sphérique.

6. Dispositif amortisseur selon l'une des revendications ci-dessus, **caractérisé en ce que** les corps d'amortissement (10) sont conçus comme des tubes remplis avec le fluide amortisseur (5), dont les extrémités sont fermées par des membranes (6), dans lequel chaque membrane comporte au moins une ouverture de passage (6a).

7. Dispositif amortisseur selon la revendication 6, **caractérisé en ce qu'**un tube (10), en particulier chacun des tubes (10), comporte à l'intérieur, entre les membranes (6) aux extrémités, une membrane supplémentaire (6), comportant au moins une ouverture de passage (6a).

8. Dispositif amortisseur selon la revendication 6 ou 7, **caractérisé en ce que** les ouvertures de passage (6a) de deux des membranes (6) consécutives dans l'étendue de la longueur des tubes (10) ne sont pas disposées en alignement.

9. Dispositif amortisseur selon l'une des revendications 6 à 8 ci-dessus, **caractérisé en ce que** les ouvertures de passage (6a) de toutes les membranes (6) d'un tube (10) sont disposées sur une hélice (9).

10. Dispositif amortisseur selon l'une des revendications 6 à 9 ci-dessus, **caractérisé en ce que** les tubes (10) sont disposés dans une sphère creuse (7) dans la zone de leurs extrémités pointant vers l'extérieur, en particulier une sphère creuse disposée dans le corps sphérique avec le même centre (M) que celui-ci et fixée à la paroi interne du corps sphérique, en particulier fixée de manière élastique.

11. Dispositif amortisseur selon l'une des revendications 6 à 10 ci-dessus, **caractérisé en ce que** le corps sphérique comporte une pluralité de sphères creuses (7) arrangées l'une dans l'autre, en particulier dotées du même centre (M), dans lequel les tubes (10) pénètrent les sphères creuses (7) dans la direction radiale, en particulier de manière étanche.

12. Dispositif amortisseur selon l'une des revendications ci-dessus 6 à 11, **caractérisé en ce que** les tubes (10) et/ou les sphères creuses (7) sont perforés.

13. Dispositif amortisseur selon l'une des revendications ci-dessus, **caractérisé en ce que** le corps sphérique est maintenu dans au moins deux blocs de support (1, 2), arrangés de manière symétrique par rapport au corps sphérique, en particulier deux blocs de support (1, 2) sur des faces opposées l'une à l'autre.
